# EUROPÄISCHE PATENTANMELDUNG

(11) **EP 2 400 430 A1**
(43) Veröffentlichungstag der Anmeldung: **28.12.2011**
(21) Anmeldenummer: 10006452.6
(22) Anmeldetag: 22.06.2010
(51) Int. Cl.: G06K 7/00, G06K 7/08

(54) **Anordnung zur Reinigung von Karten-Annahme- und/oder Ausgabesystemen**

(71) Anmelder: CardTec Card Processing Technologies GmbH, 44795 Bochum (DE)
(72) Erfinder: Künstler, Rainer, 44795 Bochum (DE)
(74) Vertreter: Griepenstroh, Jörg

(57) **Zusammenfassung**

Anordnung zum Reinigen von Karten-Annahme- und/oder Ausgabesystemen mittels einer Reinigungskarte (5), wobei die Reinigungskarte (5) dafür vorgesehen ist, in bestimmten Reinigungsintervallen über einen Kartenschlitz (4) in einen Kartentransportweg des in einem Gehäuse (3) angeordneten Karten-Annahme- und/oder Ausgabesystems (1, 1a, 1b) eingeführt zu werden, während sich das Karten-Annahme- und/oder Ausgabesystem (1, 1 a, 1b) in einem Reinigungsmodus befindet. Das Karten-Annahme- und/oder Ausgabesystem (1, 1 a, 1b) weist eine Kommunikationsschnittstelle (7) auf, mittels welcher berührungslos Steuerungsbefehle von einer mobilen Bedienungseinheit (6) empfangbar sind, um das Karten-Einlese und/oder Ausgabesystem (1, 1 a, 1 b) in den Reinigungsmodus zu versetzen.

## Beschreibung

Die Erfindung betriff eine Anordnung zur Reinigung von Karten-Annahme-und/oder Ausgabesystemen mittels einer Reinigungskarte.

Karten-Annahme- und/oder Ausgabesysteme sind üblicherweise in Gehäusen eingebaut, die zwecks Wartung, Service und Kontrolle geöffnet werden müssen, um den Zugang zu den Karten-Annahme- und/oder Ausgabesystemen zu ermöglichen. Hierzu bedarf es in der Regel einer Autorisierung des Wartungspersonals. Im einfachsten Fall bedeutet dies, dass das Personal in Besitz eines Schlüssels ist. Eine effektive Personenzugangs- oder -berechtigungskontrolle bleibt zumeist aus. Eine Kontrolle ist jedoch wichtig, da viele Automaten Bezahlautomaten sind, wie beispielsweise Ticketverkaufsautomaten, Ausfahrtterminals im Parkbereich oder im Mautbereich.

Die Reinigung der Kartensysteme ist elementar wichtig für die Gewährleistung der Funktionssicherheit, da bei den heute verwendeten Tickets, insbesondere TFC1 und TFC0 nach ISO/IEC15457 (thin flexible cards) relativ viel Staub anfällt.

Die Reinigung der Ausgabesysteme erfolgt über so genannte Reinigungskarten. Hierbei handelt es sich um eine flüchtige Reinigungsflüssigkeit abgebende Karten, die durch den Transportweg des Karten-Annahme- und /oder Ausgabesystems geführt werden. Während der eigentliche Reinigungsvorgang relativ schnell geht und nur wenige Sekunden dauert, ist anschließend allerdings eine etwas größere Pause notwendig, damit die Reinigungsflüssigkeit wieder verflüchtet und nicht mehr an den Teilen im Transportweg haftet und so weitere Verschmutzungen anzieht. Bei diesen Reinigungskarten handelt es sich um in einzelne Tüten verpackte Einheiten, die unmittelbar vor der Reinigung ausgepackt werden müssen und in das Karten-Annahme- und/oder Ausgabesystem eingeschoben werden. Wird die Reinigungskarte zu früh ausgepackt, verflüchtet sich die Reinigungsflüssigkeit, was insbesondere in heißen Ländern ein Problem sein kann. Daher ist bei der Reinigung eine gewisse Sorgfalt und Zügigkeit notwendig.

Bislang wird die Reinigung von speziellen Servicetechnikern durchgeführt. Dabei wird das Gehäuse zum Beispiel eines Drehkreuzes zur Personenzugangskontrolle geöffnet, damit die entsprechenden Schalter für den Start des Reinigungsvorgangs an dem Karten-Annahme- und/oder Ausgabesystem betätigt werden können. Das Öffnen und Schließen des Gehäuses verlängert die Dauer des Reinigungsprozesses. Zudem besteht die Gefahr, dass während der Reinigung weitere Verschmutzungen in das Innere des Gehäuses eindringen. Zugangskontrollsysteme kommen auch in staubbelasteten Umgebungen zum Einsatz, zum Beispiel an Mautstellen an Autobahnen. Es wurde festgestellt, dass allein durch den Einführschlitz für die Magnetkarte Verschmutzungen in das Innere des Karten-Annahme- und/oder Ausgabesystems gelangen. Die Staubbelastung ist daher noch viel größer, wenn das gesamte Gehäuse geöffnet wird.

Ein weiteres Risiko ist, das Werkzeuge, die auf dem Gehäuse abgelegt werden, in das Gehäuse hineinfallen. Im schlimmsten Fall kann dies zu Beschädigungen an elektrischen Komponenten des Karten-Annahme- und/oder Ausgabesystems führen.

Es besteht daher der Wunsch, das Gehäuse geschlossen halten zu können, aber gleichzeitig Verschmutzungen zu entfernen. Theoretisch ist es möglich, verdeckte Schalter anzubringen, die nur durch ein Spezialwerkzeug von außen aktiviert werden können. Solche Schalter haben jedoch den Nachteil, dass sie durch zu hohen Druck, der durch das Werkzeug ausgelöst wird, zerstört werden können. Auch handelt es sich um eine unidirektionale Steuerung. Es können keine Informationen vom Gerät ausgegeben werden. Zudem ist nur eine einzige Funktion, insbesondere die Reinigung, aktivierbar. Die Reinigung kann zwar ohne spezielles Servicepersonal durchgeführt werden und auch das Öffnen des Gehäuses entfällt, allerdings ist der Zugriff auf das Kartenannahme-und/oder Ausgabesystem sehr stark eingeschränkt.

Der Erfindung liegt die Aufgabe zugrunde, eine Anordnung zum Reinigen von Karten-Annahme- und/oder Ausgabesystemen aufzuzeigen, bei welchen das Gehäuse zur Reinigung geschlossen bleiben kann. Die Reinigung soll ohne spezielles Servicepersonal durchgeführt werden können.

Diese Aufgaben werden bei einer Anordnung mit den Merkmalen des Patentanspruchs 1 gelöst.

Vorteilhafte Weiterbildungen des Erfindungsgedankens sind Gegenstand der Unteransprüche.

Die erfindungsgemäße Anordnung zum Reinigen von Karten-Annahme-und/oder Ausgabesystemen umfasst eine Reinigungskarte, die dafür vorgesehen ist, in bestimmten Reinigungsintervallen in einem Kartentransportweg des Karten-Annahme- und/oder Ausgabesystems eingeführt zu werden, während sich das Karten-Annahme- und/oder Ausgabesystem in einem Reinigungsmodus befindet.

Hierfür weist das Karten-Annahme- und/oder Ausgabesystem eine Kommunikationsschnittstelle auf, mittels welcher berührungslos Steuerungsbefehle von einer mobilen Bedienungseinheit empfangbar sind, um das Karten-Annahme- und/oder Ausgabesystem in den Reinigungsmodus zu versetzen.

Mittels dieser Kommunikationsschnittstelle und mittels der mobilen Bedienungseinheit ist es möglich, das Gehäuse geschlossen zu halten. Mit anderen Worten entfällt das Öffnen und Schließen. Der Reinigungsvorgang kann somit schneller durchgeführt werden. Zudem können keine zusätzlichen Verschmutzungen in das Gehäuse eindringen. Werkzeuge können nicht in das Gehäuse fallen. Das Karten-Annahme- und/oder Ausgabesystem ist vollkommen geschützt vor mechanischen Fremdeinwirkungen. Der Reinigungsprozess kann ohne Sicherheitsauflagen durchgeführt werden, was insbesondere bei Bezahlautomaten von Bedeutung ist. Es ist kein spezielles Servicepersonal notwendig. Eine Beschädigung etwaiger Kontaktschalter durch fehlerhafte mechanische Bedienung ist ausgeschlossen.

In vorteilhafter Weiterbildung steht die Kommunikationsschnittstelle bidirektional mit der Bedienungseinheit in Verbindung. Das hat den besonderen Vorzug, dass eine Rückmeldung von dem Karten-Annahme- und/oder Ausgabesystem an die Bedienungseinheit erfolgt. Besitzt die Bedienungseinheit ein Anzeigemodul (Display), können zudem verschiedene Statusinformationen des jeweiligen Karten-Annahme- und/oder Ausgabesystems ausgelesen werden, beispielsweise Zählerstände, Fehlermeldungen oder auch nur die Information, dass der Reinigungsprozess erfolgreich abgeschlossen worden ist.

Zudem können mit Hilfe der mobilen Bedieneinheit verschiedene Steuerbefehle, die beispielsweise durch Tasten oder Bedienung eines Touch Screen Displays ausgelöst werden, an das Gerät gesendet werden. Hierbei handelt es sich beispielsweise um den Reinigungsprozess, den Druck eines Testtickets, das Starten einer Entstörungsprozedur (JAM-Routine), die Übermittlung von Überwachungsdaten (Monitoring), das Einspielen von Software-Updates, die Aktivierung bzw. Deaktivierung von einzelnen Karten-Annahme- und/oder Ausgabesystemen zum Beispiel im Bereich eines Gates.

Die Datenübertragung über die Kommunikationsstelle kann optisch, akustisch oder mittels Funkwellen erfolgen. Übliche Standards sind zum Beispiel IR, WIFI, Funk, Bluetooth, RFID.

Bei dem Karten-Annahme- und/oder Ausgabesystem handelt es sich insbesondere um einen Kartenlesegerät eines Zugangskontrollsystems eines so genannten Gates. Identische Anwendungen sind bei Ticketverkaufsautomaten, Bezahlautomaten und Einfahrt- bzw. Ausfahrtterminals im Bereich von Parkanwendungen bzw. bei Mautsystemen möglich.

Die Erfindung bringt den entscheidenden Vorteil mit sich, dass das Gehäuse, in welchem das Kartenlesegerät angeordnet ist, nicht geöffnet werden muss und entsprechend wenig Verschmutzungen in das Gehäuse eindringen können. Werkzeuge können nicht in das Gehäuse fallen und vor allem muss der Vorgang nicht von teurem Servicepersonal durchgeführt werden. Der Reinigungsprozess kann auch von einer angelernten Person durchgeführt werden. Diese angelernte Person muss lediglich zum richtigen Zeitpunkt die Tüte mit der Reinigungskarte öffnen und auf einen Knopf bzw. Auslöser an der mobilen Bedienungseinheit drücken, um den Reinigungsvorgang einzuleiten. Dadurch werden erhebliche Servicekosten gespart.

Die Erfindung wird nachfolgend anhand eines in den Zeichnungen dargestellten Ausführungsbeispiels näher erläutert.

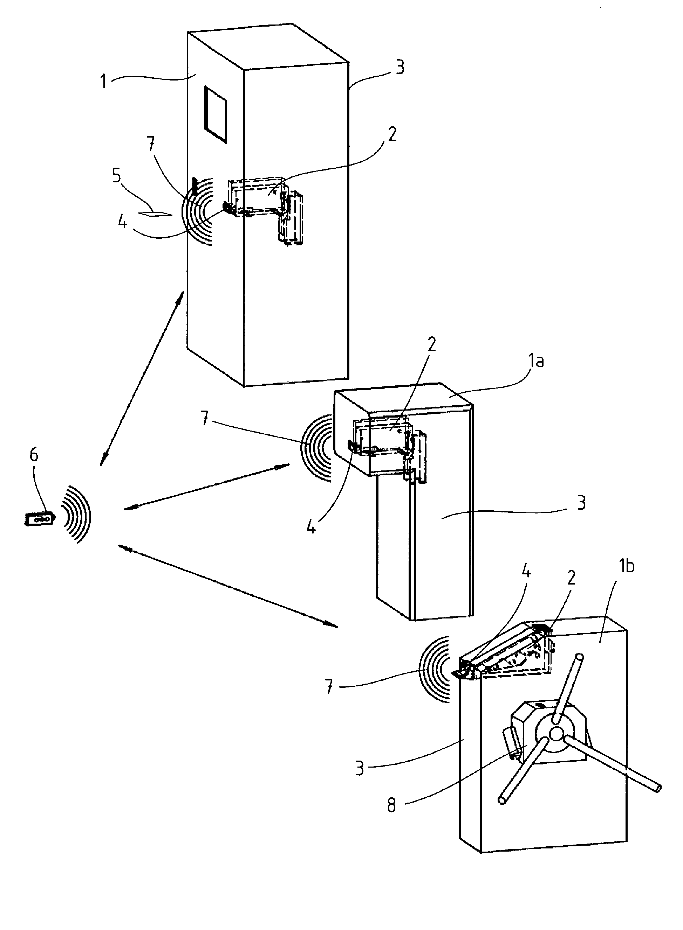

Die Figur zeigt eine schematische Darstellung dreier Karten-Annahme-und/oder Ausgabesystems 1, 1 a, 1b, wobei für Komponenten mit derselben unktion nachfolgend dieselben Bezugszeichen verwendet werden.

Ein erstes System 1 umfasst ein in einem Gehäuse 3 angeordnetes Kartenlesegerät 2. Es kann sich bei diesem System 1 um einen Bezahlautomaten handeln, der Ticketinformationen auslesen muss. Das Kartenlesegerät 2 ist in einem Gehäuse 3 vor Umwelteinflüssen geschützt angeordnet. Ein nicht näher dargestelltes Ticket kann über einen an der Frontseite des Gehäuses 3 angeordneten Kartenschlitz 4 in das Kartenlesegerät 2 eingesteckt werden. Auf dem gleichen Wege kann eine Reinigungskarte 5 in den Kartenschlitz 4 eingesteckt werden, um das Kartenlesegerät 2 zu reinigen.

Damit das Kartenlesegerät 2 weiß, dass es sich um eine Reinigungskarte 5 handelt, die anders zu behandeln ist als ein normales Ticket, ist ein Reinigungsmodus zu initiieren. Dies erfolgt mittels einer mobilen Bedieneinheit 6, die in diesem Fall über digitale Funksignale kabellos mit einer durch Funkwellen symbolhaft dargestellten Kommunikationsschnittstelle 7 des Kartenlesegeräts 2 bidirektional Daten austauscht und insbesondere den Reinigungsmodus aktiviert. Die Kommunikationsschnittstelle 7 an dem Kartenlesegerät 2 dient als Sender und Empfänger.

Die mobile Bedieneinheit 6 kann grundsätzlich mit mehreren Karten-Annahme-und/oder Ausgabesystemen 1, 1 a, 1b kommunizieren. Die einzelnen Karten-Annahme- und/oder Ausgabesysteme 1, 1 a, 1 b können hierzu eine eindeutige Kennung besitzen, die von der mobilen Bedieneinheit 6 angesprochen wird. Über entsprechende Sicherheitsstandards und Verschlüsselungstechnologien wird sichergestellt, dass die Karten-Annahme- und/oder Ausgabesysteme 1, 1 a, 1b nicht unbefugt über die Kommunikationsschnittstelle 7 manipuliert werden.

Bei dem zweiten dargestellten System 1 a handelt es sich um ein Kartenlesegerät 2, das zum Beispiel in Kombination mit einer Schranke in einem Parkhaus als Ausfahrtkontrolle zum Einsatz kommt. Die Funktionsweise ist bei der Reinigung identisch zum ersten System.

Das dritte dargestellte Karten-Annahme- und/oder Ausgabesystem 1b ist ein Zugangskontrollsystem, bei welchem ein Drehkreuz 8 zur Personenvereinzelung eingesetzt wird. Bei dieser Ausführungsform kommt ein etwas anderes Kartenlesegerät 2 zum Einsatz. An der Vorderseite des Gehäuses 3 des Systems 1 b befindet sich wiederum ein Kartenschlitz 4 sowie eine Kommunikationsschnittstelle 7, mittels welcher eine Kommunikation mit der mobilen Bedieneinheit 6 möglich ist. Bei diesem Kartenlesegerät 2 wird die eingelesene Karte an der Oberseite des Gehäuses 3 ausgegeben. Dieses Kartenlesegerät 2 wird in der gleichen Art und Weise wie das Kartenlesegerät 2 des in der Bildebene oberen Zugangssystems gereinigt. Die Karte wird nur nicht vorne wieder ausgegeben, sondern an der Oberseite.

### Bezugszeichen:

- 1 -: Karten-Annahme- und/oder Ausgabesystem
- 1a -: Karten-Annahme- und/oder Ausgabesystem
- 1 b -: Karten-Annahme- und/oder Ausgabesystem
- 2 -: Kartenlesegerät
- 3 -: Gehäuse
- 4 -: Kartenschlitz
- 5 -: Reinigungskarte
- 6 -: mobile Bedieneinheit
- 7 -: Kommunikationsschnittstelle
- 8 -: Drehkreuz

## Patentansprüche

1. Anordnung zum Reinigen von Karten-Annahme- und/oder Ausgabesystemen mittels einer Reinigungskarte (5), wobei die Reinigungskarte (5) dafür vorgesehen ist, in bestimmten Reinigungsintervallen über einen Kartenschlitz (4) in einen Kartentransportweg des in einem Gehäuse (3) angeordneten Karten-Annahme- und/oder Ausgabesystems (1, 1a, 1b) eingeführt zu werden, während sich das Karten-Annahme- und/oder Ausgabesystem (1, 1a, 1 b) in einem Reinigungsmodus befindet, **dadurch gekennzeichnet, dass** das Karten-Annahme- und/oder Ausgabesystem (1, 1 a, 1b) eine Kommunikationsschnittstelle (7) aufweist, mittels welcher berührungslos Steuerungsbefehle von einer mobilen Bedienungseinheit (6) empfangbar sind, um das Karten-Einlese und/oder Ausgabesystem (1, 1a, 1 b) in den Reinigungsmodus zu versetzen.

2. Anordnung nach Anspruch 1, **dadurch gekennzeichnet, dass** die Kommunikationsschnittstelle (7) bidirektional mit der Bedienungseinheit (6) in Verbindung steht.

3. Anordnung nach Anspruch 1 oder 2, **dadurch gekennzeichnet, dass** über die Kommunikationsschnittstelle (7) Statusinformationen der Karten-Annahme- und/oder Ausgabesystems (1, 1a, 1b) an die Bedienungseinheit (6) ausgebbar sind.

4. Anordnung nach einem der Ansprüche 1 bis 3, **dadurch gekennzeichnet, dass** die Datenübertragung über die Kommunikationsschnittstelle (7) optisch erfolgt.

5. Anordnung nach einem der Ansprüche 1 bis 3, **dadurch gekennzeichnet, dass** die Datenübertragung über die Kommunikationsschnittstelle (7) akustisch erfolgt.

6. Anordnung nach einem der Ansprüche 1 bis 3, **dadurch gekennzeichnet, dass** die Datenübertragung über die Kommunikationsschnittstelle (7) mittels Funkwellen erfolgt.

7. Anordnung nach einem der Ansprüche 1 bis 6, **dadurch gekennzeichnet, dass** das Karten-Annahme- und/oder Ausgabesystem ein Kartenlesegerät (1, 1 a, 1 b) eines Zugangskontrollsystems ist.
